# EUROPEAN PATENT APPLICATION

(11) **EP 4 778 711 A1**
(43) Date of publication of application: **22.07.2026**
(21) Application number: 26151879.9
(22) Date of filing: 14.01.2026
(51) Int. Cl.: B29C 70/54, B29C 33/02, B29C 33/30, B29C 35/00

(54) **MOULD APPARATUS**

(30) Priority: 16.01.2025 GB 202500574
(71) Applicant: Spirit AeroSystems Global Holdings Limited, London E1W 1AA (GB)
(72) Inventor: KAKARATSIOS, Zacharias, London, E1W 1AA (GB)
(74) Representative: HGF

(57) **Abstract**

Disclosed is a mould apparatus for manufacture of a composite article, and a method of using the mould apparatus. The mould apparatus has a support structure; and a panel member mounted thereto. A heating module is mounted to the support structure, the heating module comprising an inflatable bladder, and a heating pad is disposed between the inflatable bladder and the panel member. The inflatable bladder is inflatable in use to urge the heating pad against the second face, and can be deflated so that the heating pad can be removed.

## Description

### Field

The invention relates to a mould temperature control apparatus for composite manufacture.

### Background to the Invention

Composite materials are widely used in a number of industries, such as aerospace, automotive, marine, space, renewables, civil engineering and sports goods, due to their high strength-to-weight ratio.

Composite materials such as carbon fibre composite and fibreglass composite can be made from multiple plies or layers of reinforcement fabric impregnated with a matrix material such as a curable resin, a polymeric matrix or a thermoplastics material. For example, carbon fibre is formed by carbonizing synthetic polymer fibre and may be provided in the form of woven fabric, non-woven fabric or may consist of unidirectional fibre, tows or tapes. Similar composites may be formed using alternative reinforcement materials such as a glass fibres, synthetic polymer fibres (e.g. aramid), natural fibres (e.g. cellulose), or combinations of such materials.

In a typical composite manufacturing process, a dry or pre-impregnated reinforcement material is deposited (or "laid-up") on a tooling surface, for example in layers of a reinforcement fabric material, and a flexible or semi-flexible impermeable barrier (or "vacuum bag") sealed to the tooling surface around the resulting reinforcement lay-up. The lay-up is then compressed by reducing pressure under the vacuum bag and/or increasing pressure externally.

Dry reinforcement material commonly includes a binder, and once compressed, the reinforcement lay-up can retain its shape whilst being flexible to some degree. This "pre-form" can then be transferred to another tooling surface, or multiple pre-forms assembled to form a more complex composite article.

In one approach, the dry-preform is infused with matrix material when in a vacuum bag, in many instances the same vacuum bag setup as used to consolidate the layup. Infusion in out of autoclave (OoA) methods is normally driven by the pressure differential between the feed reservoir of matrix material and the reduced pressure in the vacuum bag. Infusion in autoclaving manufacturing methods can be performed similarly, but using the external autoclave pressure to remove any excess matrix material.

Alternatively, in resin transfer moulding (RTM) or two (or more) rigid moulds can be used, which are brought together and sealed such that their tooling surfaces define a mould cavity, the cavity evacuated and resin injected into the cavity.

Pre-impregnated reinforcement material is also used in both autoclaving and OoA methods. The pre-preg is laid up and consolidated in a similar manner to techniques using dry fabric, and both compressed and cured in a vacuum bag.

Whether dry or pre-preg reinforcement is used, the temperature of the reinforcement material form must be carefully controlled throughout, particularly during infusion and curing/setting of the matrix material, to ensure consistent properties of the composite article, avoid over or under infused regions, voids or the like. It is also desirable to optimise temperature profiles (i.e. the change of temperature over time) of a part to minimise cycle times and energy expenditure.

In some manufacturing methods a layup or preform is externally heated, in an oven or autoclave. These types of "convection heating" methods can be relatively costly, however, because the entire mould apparatus must be heated.

To reduce energy costs, self-heated moulds have been developed. One approach is to bond heating elements to the mould, on a surface (referred to as the B-face) opposite to and in the vicinity of the tooling surface of the mould. Together with insulation to reduce heat loss away from the mould surface, this approach is dramatically more energy efficient than using external heating. However, adhesive used to bond the heating elements to the B-face is subject to significant heat stress and tends to age and crack. In turn, this can lead to inconsistent heating of the composite article on the mould, and the heating elements themselves can overheat and further propagate damage to the apparatus. Consequently, moulds of this type require frequent maintenance and repair and can result in quality control issues for composite article manufactured before defects are identified.

It is also known to embed heating elements in a mould structure, for example by creating laminated moulds of structural material layers that sandwich the heating elements. This approach can be particularly energy efficient for moulds with composite tooling surfaces, but requires electrical isolation of the heating elements adding to the manufacturing complexity of such tools. The working lifetime of the apparatus can be greater than tools with bonded heating elements, however heat stresses can cause disbonds between the heating and the structural elements. These are typically initiated by manufacturing defects or thermal expansion differentials between the insulating, heating and structural elements. Disbands can cause local "hot spots" during operation. Again, these will cause the disbands to develop and propagate and result in inconsistent thermal performance of the mould apparatus, leading to increased quality control failure rates of manufactured composite parts. When such breakdowns or delamination of the mould structure occur, the tools with embedded heating elements are effectively non-serviceable and the mould surfaces incorporating the heating elements must be replaced.

Accordingly, there remains a need for improvements to directly heated moulds used in composite manufacture to mitigate or address these issues.

### Summary of the Invention

According to a first aspect of the invention there is provided a mould apparatus for manufacture of a composite article, the mould apparatus comprising:
a support structure; and
a panel member mounted to the support structure; having a first face and an opposite second face; at least portion of the first face thereof defining a mould surface;
wherein a heating module is mounted to the support structure, the heating module comprising a heating pad and an inflatable bladder, wherein the heating pad is disposed between the second face and the inflatable bladder;
wherein the inflatable bladder is inflatable to urge the heating pad against the second face.

In use, the inflatable bladder is inflated to press the heating pad into thermal contact with the panel member, against the second side thereof. Advantageously, the inflatable bladder and heating pad may be configured to maintain an even pressure distribution across the area of contact between the heating pad and the second face.

The inflatable bladder can also be deflated, whereby the heating pad can be removed and replaced or repaired, if required. This arrangement removes the requirement for a heating element to be bonded to or embedded in the panel, which might otherwise limit the working lifetime or increase maintenance time and costs for the mould apparatus.

The at least the heating pad, and optionally the inflatable bladder or the heating module as a whole may be removable from the mould apparatus, when the inflatable bladder is deflated (i.e. when the pressure in the bladder is reduced to below ambient pressure outside of the bladder).

A further benefit of the invention disclosed herein is that existing mould apparatus may be retrofitted with heating modules.

The mould surface may be planar, or curved. The mould surface may comprise one or more planar regions and/or curved regions. The mould surface may comprise one or more discontinuities.

The inflatable bladder may comprise flexible walls.

**In** some embodiments, the heating pad is advantageously flexible. Accordingly, both the inflatable bladder and heating pad can be made to conform to the shape and configuration of the second surface. Indeed, a degree of flexibility (in response to pressures applied in normal use) of the inflatable bladder and/or heating pad facilitate even pressure distribution regardless of the configuration of the second face.

The heating pad may comprise one or more than one heating element, embedded in or mounted to a substrate, such as a fabric or plastics (e.g. silicone, nitrile or other suitable polymeric or plastics material) substrate. Inductive or conductive heating element(s) may be used, as required for a particular purpose.

The heating module may comprise a housing, wherein the inflatable bladder and the heating pad are mounted in the housing.

The housing may be of any suitable construction, such as a box, frame or crate having an open face or end oriented towards the second face.

At least the heating pad may be removable, for replacement, maintenance etc. The inflatable bladder may be removable. In some embodiments, the heating module as a whole may be removable, for example as a removable cassette.

Removable components of the heating module may be accessed in any suitable manner. For example, the heating module may be accessed by removing the panel member from the support structure, or by removing access panels or the like from the support structure.

The heating module may advantageously further comprise a temperature sensing arrangement, comprising for example one or more thermistors or thermocouples. A temperature sensing arrangement may be provided proximate to the heating pad. A temperature sensing arrangement may form part of the heating pad.

The heat output of the heat pad may be regulated by closed loop control, such as **PID** control, based on readings from the temperature sensing arrangement. The control may be effected by a processing resource, which may form part of the apparatus disclosed herein, such as a computer processor running software of firmware. Closed loop control may be used to follow a pre-determined temperature profile, as known in the technical field of the invention.

A temperature sensing arrangement may form part of or be bonded to the panel member.

In some embodiments, the temperature sensing arrangement is disposed in use between the heading pad and the second face. A temperature sensing arrangement so located is in use in good thermal contact with the panel member and thus able to monitor temperature that reflects the adjacent parts of a preform or composite article.

The temperature sensing arrangement may advantageously also be removable.

The temperature sensing arrangement may be formed as a flexible mat, having one or more thermocouples, thermistors or strain temperature sensors or other suitable temperature sensor or sensors thereon or therein.

Advantageously, the heat pad and, where present, temperature sensing arrangement, are not bonded in any way to the panel member and, in use, engaged therewith by fluid pressure within the inflatable bladder. That is to say, in some embodiments, the heating module does not comprise adhesive between the panel member and the heating pad and/or temperature sensing arrangement. Indeed, the heating module may itself be formed of separable and independently replaceable parts, including the inflatable bladder, heating pad, temperature sensing arrangement, etc.

It is also envisaged that the heating pad and/or temperature sensing arrangement may be integral to the inflatable bladder, in some embodiments.

The heating module may include one or more thermal insulation layers. Each of the insulation layers may independently be compressible and/or flexible.

The heating pad may be disposed between a thermal insulation layer and the panel member. The heating pad may comprise a thermal insulation layer, across a face oriented away from the panel member in use.

Alternatively, or in addition, the inflatable bladder may be disposed between the thermal insulation layer and the panel member. The inflatable bladder may comprise a thermal insulation layer, in or on one or both faces thereof, or all of the walls of the inflatable bladder.

The inflatable bladder may in use be inflated by any suitable fluid medium. A gas, such as compressed air or nitrogen may be used, or a liquid medium such as oil, an uncured resin or water may be used. The construction of the inflatable bladder may be selected accordingly. The bladder may for example comprise a silicone material a rubberised fabric or the like, as known in the art.

The fluid medium may be heated, so as to reduce or eliminate a temperature gradient away from the first face. Accordingly, the inflatable bladder may in be inflatable using a heated fluid medium, so as to reduce or eliminate a temperature gradient away from the first face of the panel member. The fluid be used in some embodiments to assist in temperature regulation of the preform or composite article on the mould surface and it is contemplated that coolant may be flowed into the inflatable bag after curing of a curable matrix material to form a composite article or infusion of a settable matrix material, to cool the composite article on the mould surface and shorten cycle times.

The heating module may comprise more than one heating pad, or a plurality of heating pads. A plurality of heating pads may be arranged in an array, across the second face. The more than one heating pad may be shaped so as to form a tessellating array, across at least a part of the second face.

The mould apparatus may comprise two or more, or a plurality of heating modules.

The heating modules may be arranged in an array, across the second face. The heating modules may be shaped so as to form a tessellating array, across at least a part of the second face.

The support structure may be a so called "egg crate" type construction, of multiple typically orthogonal support members defining spaces therebetween to receive a heating pad or an entire heating module. Indeed, existing or conventional mould apparatus of this general type of construction may be retrofitted with heating modules as disclosed herein.

A mould apparatus with multiple heating modules or heating pads facilitates variation in heating input and/or output in different regions of a composite article or preform on the tool. In this way, variations in the thickness and/or geometry, or other factors influencing thermal properties of an article or preform can be better accommodated. Methods and apparatus for forming a composite article using a tool with multiple heating zones or nodes are disclosed for example in US 11,45,3148, to Spirit AeroSystems (Europe) Limited, and US 8,473,093, to Gershenfeld et al.; the contents of which are incorporated herein by reference. These documents describe how a network of "nodes" might be embedded in an OOA curing tool and subject to closed loop control by a processor, where each node comprises a thermistor or thermocouple, and a heating element. The processor controls the heating input based on detected temperature, in order to follow a predetermined curing temperature profile. The closed loop approaches disclosed therein can be applied to a mould apparatus in accordance with the invention having multiple heating pads.

Thus, the heat output of each of a plurality of the heating pads may be regulated by closed loop control, based on readings from a temperature sensing arrangement.

Each heating pad may be associated with a corresponding temperature sensing arrangement, wherein the heat output of each of a plurality of the heating pads is regulated by closed loop control, based on readings from the corresponding temperature sensing arrangement.

Such closed loop control can therefore provide for a temperature profile to be followed across a composite part of preform and accommodate local variations in geometry and thickness and the like that can result in differing heat input requirements in different regions.

Control over multiple heating pads may alternatively be effected by pre-determined heating inputs to each of multiple heating elements.

The support members may define a space into which the heating module may be installed. The heating module may include a heating pad and inflatable bladder installed in a separate housing, and the heating module comprising said housing may be installed into a space defined by the support members, or otherwise mounted to the support structure.

The mould surface and thus panel member may be at any required orientation, and so may be supported by or against the support structure, suspended from the support structure etc.

The panel member may be metallic, or composite or any suitable material or combination thereof. The panel member may be CTE matched, to the CTE (coefficient of thermal expansion) of the composite article to be made using the mould apparatus.

The mould apparatus may be adapted for use with a vacuum bag. As known to one skilled in the art, a vacuum bag is a flexible or semi-flexible impermeable barrier placed over and sealed to the first face around a layup or pre-form. The pressure in the vacuum bag (or, more specifically, in the volume defined between the first face and the vacuum bag) is then reduced using a vacuum pump and the layup or pre-form is compressed under the resulting pressure differential between the vacuum bag and ambient pressure. Such compression can be used to consolidate a layup and form a pre-form (optionally, using heating to activate surface binder). The pressure differential may be used to drive infusion of matrix material into a pre-form, and to maintain fibre volume ratio during curing or setting of matrix material.

The mould apparatus may comprise two mould parts, the first mould part comprising the said support structure, panel member and heating modules(s) disclosed above, and the second mould part comprising a complimentary mould surface, wherein the first and second mould parts are sealable together to define a mould cavity. As known to one skilled in the art, the mould apparatus may be used for techniques such as resin transfer moulding, to form a composite article.

Both the first and the second mould parts may comprise a respective support structure, panel member and heating module(s) as disclosed herein.

The mould apparatus may include any such ancillary apparatus as required for composite manufacture, including *inter alia* computer processing apparatus for regulating the supply of current to the heating pad(s), means for inflation/deflation of the or each inflatable bladder, such as one or more pumps, a supply of fluid media, conduits to supply fluid media to the or each bladder, controllable valves or the like. The mould apparatus may comprise a vessel for containing a source of matrix material, a source of matrix material, conduits to supply matrix material to a mould cavity or vacuum bag, vacuum apparatus for reducing pressure in a mould cavity or vacuum bag, or the like.

Herein, the term "mould" or "mould surface" refers to the tooling used to define the shape and configuration of at least one outer face of the final composite article. A mould may include more than one mould part, each defining a respective outer face of the final composite article. Ther term "tooling surface" refers more generally to a surface upon which reinforcement material is placed, during layup and/or moulding. As known in this technical field, a layup may be pre-formed on one tooling surface, for example a flat tooling surface, and subsequently transferred to another tooling surface, for example of a mould.

Herein, the term "consolidation" or "pre-forming" refers to the process whereby layers of reinforcement material (either dry or pre-impregnated) is compressed. Pre-forming may be conducted in a vacuum bag, optionally under heating to activate surface binder. As known in the technical field, where pre-preg material is used, such heating will typically be at a temperature below that to render any matrix material flowable, or cause curing of a curable matrix material.

A composite article as disclosed herein comprises a fibrous reinforcement material impregnated with a matrix material. The fibrous reinforcement material typically comprises a fabric material. The fabric material may be woven, non-woven, non-crimp, unidirectional or the like. Multiple plies of fabric material may be used. The fabric material may comprise one or a blend of fibrous reinforcement material, such as carbon fibre reinforcement, or a glass fibre reinforcement, optionally interwoven with another fibrous reinforcement material, such as Kevlar, aramid fibre, flax or the like. A composite article may comprise more than one type of fabric material, such both woven and unidirectional fabric in different regions of the composite article, or fabric of a first material (e.g. carbon fibre fabric) interleaved with fabric of a second material (e.g. aramid fibre fabric). Any suitable matrix material may be used, such as a curable matrix material (e.g. an epoxy) or a settable matrix material (e.g. a thermoplastic matrix material).

The invention extends in a second aspect to a heating module. The heating module can be used with the mould apparatus disclosed herein. The heating module comprises a housing and a heating pad and an inflatable bladder in the housing. The heating module may further comprise a temperature sensing arrangement and/or one or more insulation layers as disclosed herein in relation to the first aspect. The housing may be sized to be received in a cavity within the support structure of a mould apparatus. The inflatable bladder, heating pad, temperature sensing arrangement and/or one or more insulating layers may be removably mounted in the support structure. The inflatable bladder, the heating pad and, where present the temperature sensing arrangement and insulation layer(s) may be removably housed in the housing.

In a third aspect, there is a method of making a composite article, the method comprising:
providing a mould apparatus in accordance with the first aspect;
providing a layup or pre-form on the mould surface; and
heating the layup or pre-form using the heating pad.

The method may comprise inflating the or each inflatable bladder, to urge the heating pad against the second surface of the panel member. Inflating the/each inflatable bladder may comprise inflating with a suitable fluid medium, such as compressed air, oil, water or the like.

Heating the pre-form or layup may include flowing heat from the fluid medium to the preform or layup.

The method may comprise flowing a heated fluid medium into the or each inflatable bladder.

The method may comprise heating the fluid medium. The term heating is taken to mean raising the temperature of the fluid medium above ambient temperature.

The fluid medium may be used to heat the layup or pre-form in conjunction with the heating pad or pads, or in a separate step. For example, sufficient heat may flow from a hot fluid medium to activate a surface binder and facilitate consolidation to form a pre-form, whereas subsequent steps of infusion, curing etc. may be facilitated using the or each heat pad.

The method may comprise flowing heat from the formed composite article to the fluid medium, after the step of heating, for example after infusion and/or curing. The method may comprise flowing a cooled fluid medium into the or each inflatable bladder. The method may comprise cooling the fluid medium.

The heating module may comprise a temperature sensing arrangement, as disclosed herein. The temperature sensing arrangement may be adjacent to the heating pad, for example between the heating pad and the second face of the panel member. The method may comprise supplying heat to the layup or preform using the heating pad to follow a predetermined time-temperature profile, wherein the heat output of the heating pad is regulated by closed loop control, based on readings from the temperature sensing arrangement.

The method may comprise laying up reinforcement fabric on the mould surface, to provide a layup. The method may comprise consolidating the layup to form a pre-form. Consolidating may comprise sealing a vacuum bag over the layup and evacuating the vacuum bag. Consolidating may comprise warming or heating the layup using the heat pad(s).

The method may comprise laying up and consolidating on a tooling surface, and transferring the resulting pre-form to the mould surface.

The pre-form may comprise a matrix material.

The method may comprise curing or melting the matrix material using the or each heat pad.

The pre-form may comprise pre-impregnated reinforcement fabric.

The method may comprise infusing a dry pre-form or a dry layup with matrix material. During infusion, the preform or layup may be heated using the or each heat pad. Such heating may render flowable or reduce the viscosity of the matrix material. Such heating may cause curing of a curable matrix material.

The method may be an out of autoclave method, such as resin transfer infusion, vacuum assisted resin transfer infusion, resin transfer moulding, vacuum assisted resin transfer moulding or the like.

In a fourth aspect, there is provided a method comprising:
providing an apparatus comprising:
a support structure; and
a panel member mounted to the support structure; having a first face and an opposite second face; at least portion of the first face thereof defining a mould surface;
the method comprising:
providing a heating module that comprises an inflatable bladder and a heating pad; and
mounting the heating module to the support structure with the heating pad is disposed between the inflatable bladder and the second face, such that the inflatable bladder is inflatable to urge the heating pad against the second face.

The method may be a method of assembly or form part of a maintenance operation on a mould apparatus as disclosed herein. The method may be a method of retrofitting a mould apparatus comprising a support structure; and a panel member mounted to the support structure; the panel having a first face and an opposite second face; at least portion of the first face thereof defining a mould surface.

The method may comprise removing a heating pad from the apparatus.

The method may comprise removing an inflatable bladder from the apparatus.

The method may comprise removing a heating module from the apparatus.

A first heating pad and/or inflatable bladder or heating module may be removed and a second first heating pad and/or inflatable bladder or heating module may be subsequently mounted to the support structure.

The method may comprise mounting a first heating pad and/or inflatable bladder or heating module, using the mould apparatus so formed in a method of manufacture of a composite article as disclosed herein (potentially to make multiple composite articles), and then removing and mounting a second heating pad and/or inflatable bladder or heating module

It will be understood that mounting and/or removing a heating module may be conducted in steps, such as mounting/removing a heating pad and then an inflatable bladder or vice versa. The heating module may further comprise a temperature sensing arrangement or one or more insulation layers or other features as disclosed herein, each of which may be installed sequentially in a required order.

The heating module or modules may be provided in a housing, and the method may comprise mounting the housing to the support structure, or removing the housing (together with the heating module as a whole) from the support structure.

The heating module may be mounted in any suitable way, but may conveniently be mounted in a space or cavity defined by the support structure (either as a whole, contained within a housing, or the constituent parts of the heating module may be mounted in said space or cavity sequentially). The support structure may for example be of "egg crate" construction as disclosed herein, and the heating module mounted between the support elements thereof.

The method may comprise mounting/removing multiple heating modules or components thereof (the components being at least the heating pads).

It will be understood that the various features discussed in relation to a particular aspect or embodiment correspond to optional features of any other aspect or embodiments. Moreover, the various features disclosed herein are contemplated in any combination, unless otherwise specified.

### Description of the Drawings

Non-limiting example embodiments will now be described with reference to the following figures in which:
Fig. 1 shows a schematic cross sectional view of a vacuum assisted resin transfer infusion and curing setup;
Fig. 2 is an exploded perspective view of a heating module;
Fig. 3 is a perspective view of a support structure of an embodiment of a mould apparatus according, with a heating module installed;
Fig. 4 is a schematic cross sectional view of an embodiment of a mould apparatus;
Fig. 5 is a schematic cross sectional view of an embodiment of the mould apparatus, with a layup in a vacuum bag on the mould surface thereof;
Fig. 6 is a perspective view of another embodiment of a mould apparatus; and
Figs. 7 and 8 are simplified schematic cross sectional views of the mould apparatus.

### Detailed Description

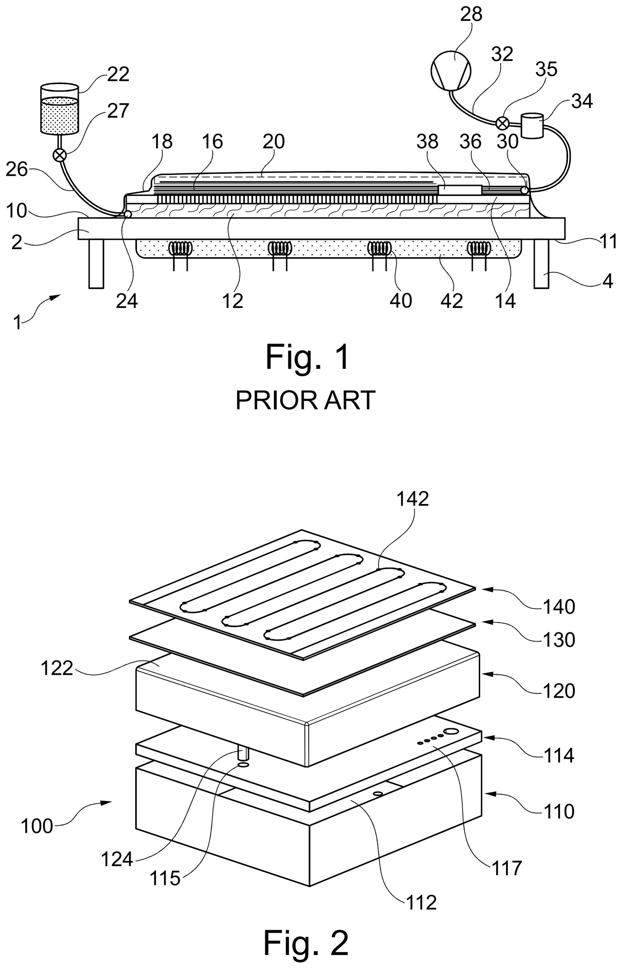

Figure 1 is a schematic cross sectional side view of a typical through thickness resin infusion and curing set-up.

A mould apparatus 1 has a panel member 2 supported by a support structure 4. On a mould surface 10 of the panel member, is placed a flow media 12 (formed from a plastics mesh material or the like) and a porous or perforated caul plate 14 is placed over the flow media. A dry pre-form or layers of dry reinforcement are laid up or deposited on the caul plate to form the dry reinforcement lay-up 16 that will later be infused. A flexible (typically nylon) vacuum bag 18 is placed over the laminate (separated therefrom by a caul plate 20, typically a rubber pad and flow media. The bag 18 is sealed to the tool 10 around the periphery. Various adhesive tape layer, intensifier or release film layers may also be used, but these are omitted form the figure for clarity.

A resin feed reservoir 22 is connected to a resin inlet 24 to the vacuum bag via an inlet line 26 and a nozzle (not shown). An inlet valve 27 is positioned in the inlet line 26 to regulate flow through the inlet line. The inlet 24 communicates directly with the flow media 12.

A single inlet line and inlet is depicted, although multiple inlets may be required in certain cases, optionally via pre-moulded channels in the underside of the vacuum bag itself.

A vacuum pump 28 is similarly connected to an outlet 30 from the vacuum bag via a vacuum line 32 and an optional resin catch pot 34 (to prevent any resin entering the vacuum line from reaching and damaging the pump). An outlet valve 35 is positioned in the outlet line 32. In the embodiment shown, the outlet 30 communicates directly with a sacrificial portion of the reinforcement lay-up 36. The sacrificial portion 36 and outlet 30 are separated from the rest of the reinforcement material by a "dead zone" 38. This optional arrangement reduces the likelihood of resin flowing to the outlet in use, bypassing areas of the reinforcement.

Multiple outlets and vacuum lines may be present in some circumstances. It should also be appreciated that the sequence of layers may vary. For example, a flow media may be placed above a reinforcement lay-up and/or the reinforcement material may be separated from flow media by alternative porous layers, such as a peel ply.

In a conventional vacuum assisted resin transfer infusion (VARTI) process, with the inlet valve 27 closed and the outlet valve 35 open, the vacuum pump 28 is activated and air pumped from the vacuum bag. Over time, the pressure throughout the items in the bag equalises to the pressure in the vacuum line 32, normally a fraction of the ambient pressure (e.g. less than around 15%, 10% or in some applications around 1% of ambient pressure).

In this state, due to the pressure differential between the inside and the outside of the bag, the reinforcement lay-up 16 is compressed. It should be noted that this process is conventionally used at various stages during the course of laying up the reinforcement material, to de-bulk the reinforcement material.

The inlet valve is then opened, such that resin is transferred from the reservoir 22 through the inlet 24. Resin flows comparatively freely through the flow media 12 and then infuses through the caul plate 14 (where present) and into the reinforcement lay-up 16 across the face of the tool 10.

When the reinforcement lay-up 16 is fully saturated, the valves 27 and 35 are closed and the infused reinforcement is cured either naturally or with the application of heat.

Heat may also be applied to render the resin flowable, or reduce the resin viscosity to facilitate infusion throughout a preform.

Prior to infusion, the dry reinforcement fabric may be laid up on the mould 10 to form a layup, and then compressed or consolidated in the vacuum bag to form a pre-form. During this process, the layup may be heated to a lower temperature to activate surface binder while the layup is compressed in a vacuum bag.

Conventionally, heating can be provided externally, or via integrated heating elements, such as heating elements 40, bonded to the underside 11 (a second face of the panel member 2) with adhesive 42. As disclosed herein, while adhesives such as high temperature epoxies can withstand temperatures required for composite manufacture (typically over 180 Celsius and as high as 300 Celsius for some resin systems), over time the adhesive will be prone to ageing and requires frequent maintenance.

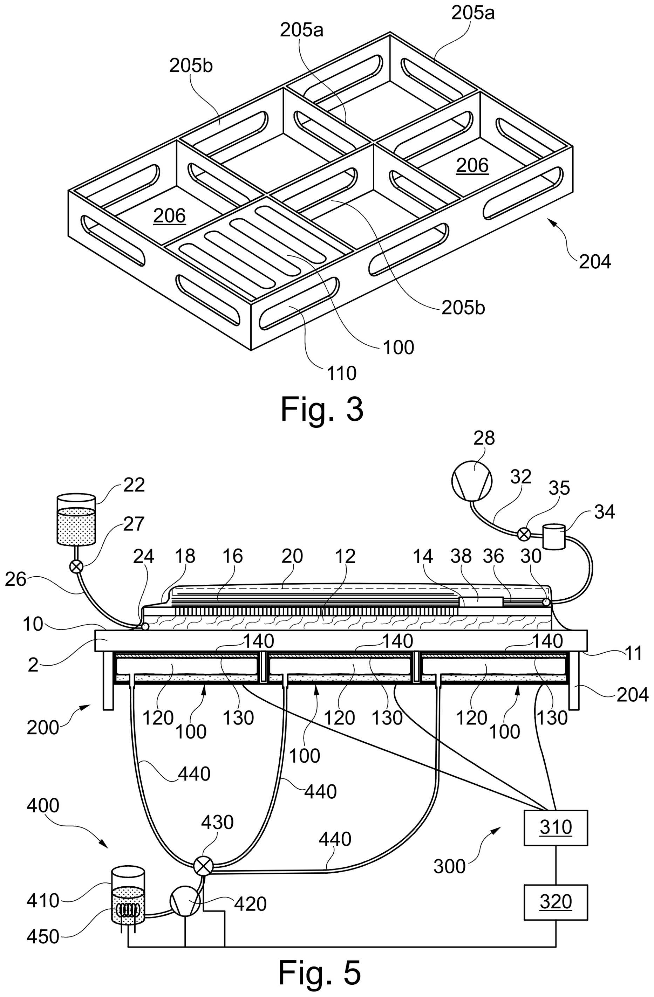

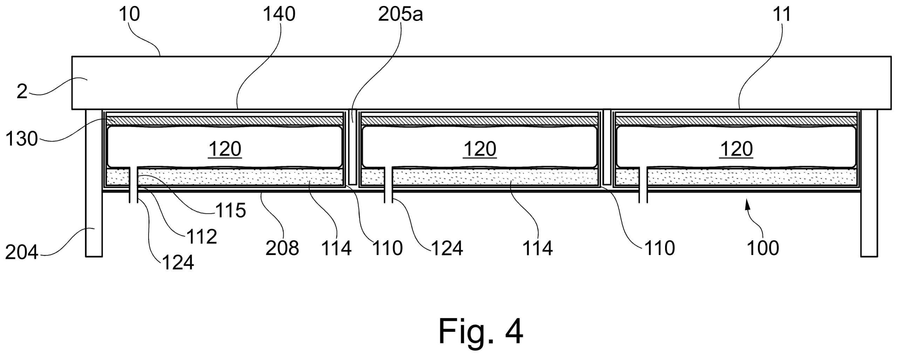

An exploded view of an embodiment of a heating module is shown in Fig. 2. Fig. 3 shows a support structure for a mould apparatus with a heating module installed. Fig. 4 shows a cross sectional view of an embodiment of the mould apparatus.

The heating module 100 includes a housing 110, in the form of a metallic open topped box (other materials or constructions can be used). An insulation layer 114 is installed in the base 112 of the housing 110, to limit heat loss away from the panel member.

The heating module 100 further includes an inflatable bladder 120, formed of a material impermeable to the fluid medium used for inflation, such as oil or an uncured resin. Conveniently, a silicone may be used. The walls of the inflatable bladder 120, in particular the upper facing wall 122 (in the orientation shown in the figure), is flexible to allow the bladder to conform to the underside of the panel member and/or apply an even pressure across the heating pad.

Above (in the orientation shown) the bladder 120, is a heating pad 130, including a resistive heating element or elements. The heating pad 130 is also flexible. Above the heating pad 130 is a temperature sensing arrangement 140, in the form of a flexible pad having a thermocouple wire 142 embedded therein.

In use, and as illustrated in Fig. 4, the heating pad 130 is positioned between the inflatable bladder 120 and the panel member 2. When the inflatable bladder 120 is inflated with a fluid medium, the heating pad 130 is and urged against the underside (second surface) 11. The temperatures sensing arrangement 140 is disposed between the heating pad 130 and the panel member's underside 11, and is thereby positioned such that temperature readings therefrom most closely reflect those of the panel member 2 and thus a composite article, layup or preform thereon.

The inflatable bladder 120 includes an access port 122, connectable in use to a supply of fluid media (not shown), via suitable conduits. Control means to regulate flow into and pressure within the bladder may also be provided. In the embodiment shown, the housing 110 and insulating layer 114 also include aperture 112, 115 respectively to allow access for a port 124 to pass therethrough to the inflatable bladder, as shown in Fig. 4. Apertures 117 are also provided for cabling to the heating pad 130 and temperatures sensing arrangement 140, however these are omitted from the figures for clarity.

It will be understood that the sequence of layers may vary in other embodiments, as disclosed herein. Furthermore, one or more layers may be integrated with one another, such as a bladder with walls including an insulating material, or a combined heating pad and temperature sensing means. Additional layers, such as additional insulating layers may also be present.

Fig. 3 shows a perspective view of the support portion 204 of an embodiment of a mould apparatus 200 (see Fig. 4). The support portion 204 has an egg crate construction that includes interlocking orthogonal beams 205a, 205b between which are defined voids or volumes 206. The heating module 100 is sized to be received in a volume or void 206 and the housing 110 is adapted to be secured to the support portion 204. This can be achieved in any suitable manner, for example using a fixing extending between the housing and the support portion (not shown), or alternatively the heating module 100 can rest upon a lower access panel 208, for example.

Each of a plurality of heating modules 100 can be installed in respective voids, in a generally tessellating array, such that the heating pads 130 and temperature sensing arrangements 140 of the modules 100 are engaged against substantially all of the portion of the second face, underside 11 of the panel member 2 that is adjacent to the mould surface 10.

At least the temperature sensing arrangement 140 and heating pad 130, and in the embodiment shown also the insulating layer 114 and inflatable bladder 120 are removably housed in the housing 110, without adhesive or bonding of any form. By virtue of the fixed relationship between the housing 110 and the panel member 2, whereby the fluid pressure in the inflatable bladder 120 can be used to urge the heating pad 130 and temperature sensing arrangement 140 into contact with, and maintain contact with, the second face 11 of the panel member 2 without the need for any adhesive or other means of fixings. In turn, this provides for the heating module 100 to be removed (via the access panel, in the embodiment shown) and for the various components to be removed and independently replaced or repaired.

Fig. 5 schematically illustrates a method of manufacturing a composite article. Features in common with the setup shown in Fig. 1 are provided with like reference numerals. While a method of VARTI is illustrated, in which resin is infused while the layup 16 is under vacuum within the vacuum bag 18, and subsequently cured in situ, a mould apparatus in accordance with the invention can be used with other composite manufacturing methods, including closed mould methods such as RTM and VARTM, and autoclave manufacturing methods. Furthermore, although an infusion method is illustrated, the invention can also be used in connection with composite manufacturing using pre-preg reinforcement material.

In use, each of the heating pads 130 is controllable via a closed loop system (generally indicated as 300, based on signals from the respective temperature sensing arrangements 140. The closed loop system 300 includes a PID controller 310 for regulating power to the heat pads 130, implemented by a computer processor 320, to follow a predetermined curing (time temperature) profile as known to one skilled in the art. Moreover, the heat pads 130 can be independently regulated, to accommodate variations in part thickness and the like.

The apparatus in Fig. 5 further includes a fluid system 400 that includes a source vessel 410 of a fluid medium (e.g. an uncured resin or other medium stable at curing temperatures), a pump 420, a solenoid valve 430 and conduits 440 to each inflatable bladder 120, coupled to the ports 124. The vessel 410 may additionally include a heating element 450 and the heating element 450, valve 430 and pump 420 can be controlled via a computer processor, in the embodiment shown the computer processor 320, to regulate fluid flow, temperature and pressure in the bladders 120. In other embodiments (not shown) the vessel 410 may be adapted to also (or alternatively) cool the fluid therein, or the system 400 may include an additional vessel of cooled fluid medium, whereby the bladders can be filled with cooled fluid to remove heat from a formed composite part after curing to reduce cycle times.

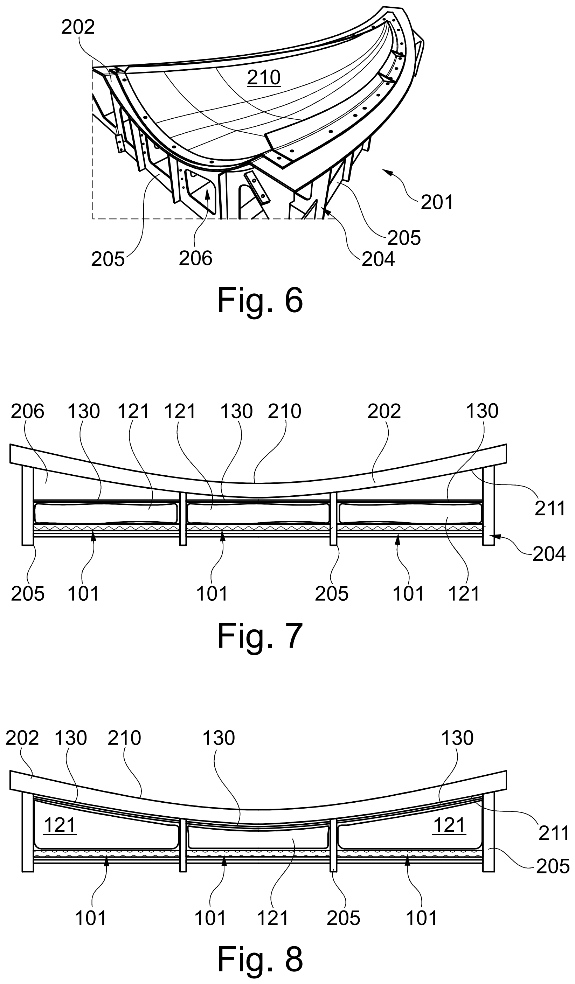

Fig. 6 shows a further mould apparatus 201, with a concave panel member 202 defining a curved mould surface 210; the panel member 202 being supported by a support structure 204. Fig. 7 shows a schematic simplified cross section of the mould apparatus 201, through X, with each of three heating modules 101 installed in voids 206 between the beams 205 defining the support structure. The inflatable bladders 121 of the heating modules 101 are shown in a deflated state. In Fig. 8, the inflatable bladders 121 are shown when inflated with a fluid medium, such that the voids 206 are filled and the heating pads 130 are pressed against the convex underside 211 of the panel member 202, whereby the flexible material of the bladders 121 and the heating pads 130 are able to conform to the curvature of the panel member 202.

Whilst exemplary embodiments have been described herein, these should not be construed as limiting to the modifications and variations possible within the scope of the invention as disclosed herein and recited in the appended claims.

## Claims

1. A mould apparatus for manufacture of a composite article, the mould apparatus comprising:
a support structure; and
a panel member mounted to the support structure; having a first face and an opposite second face; at least portion of the first face thereof defining a mould surface;
wherein a heating module is mounted to the support structure, the heating module comprising a heating pad and an inflatable bladder, wherein the heating pad is disposed between the second face and the inflatable bladder;
wherein the inflatable bladder is inflatable to urge the heating pad against the second face.

2. The mould apparatus of claim 1 , wherein the heating pad is flexible, and the inflatable bladder and heating pad is operable to conform to the shape and configuration of the second surface, when the inflatable bladder is inflated.

3. The mould apparatus of claim 1 or 2, wherein the heating module comprises a housing, wherein the inflatable bladder and the heating pad are mounted in the housing; optionally:
wherein the heating pad and the inflatable bladded are removable, or
wherein the heating module as a whole is removable.

4. The mould apparatus of any preceding claim, wherein the heating module further comprises a temperature sensing arrangement, proximate to the heating pad or forming a part of the heating pad; wherein the heat output of the heating pad is optionally regulated by closed loop control, based on readings from the temperature sensing arrangement.

5. The mould apparatus of claim 4, wherein the temperature sensing arrangement is disposed between the heading pad and the second face and engaged with the second face by fluid pressure in the inflatable bladder; and/or wherein the temperature sensing arrangement is formed as a flexible mat, having one or more thermocouples of thermistors or strain temperature sensors thereon or therein.

6. The mould apparatus of any preceding claim, further comprising a thermal insulation layer, wherein the heating pad and optionally the inflatable bladder is disposed between the thermal insulation layer and the second face of the panel member.

7. The mould apparatus of any preceding claim, comprising a plurality of heating pads arranged in an array, across at least a part of the second face; and/or a plurality of heating modules arranged in an array, across at least a part of the second face.
control, based on readings from the corresponding temperature sensing arrangement.

8. The mould apparatus of any preceding claim, wherein the support structure is of an "egg crate" type construction, of multiple and optionally orthogonal support members defining spaces therebetween to receive a heating pad or heating module.

9. A heating module for a mould apparatus according to any preceding claim, the heating module comprising:
a housing; and a heating pad and an inflatable bladder in the housing.

10. The heating module according to claim 9, further comprising a temperature sensing arrangement and/or one or more insulation layers; wherein the inflatable bladder, the heating pad, the temperature sensing arrangement and/or the insulation layer(s), are optionally removably housed in the housing.

11. A method of making a composite article, the method comprising:
providing a mould apparatus in accordance with any one of claims 1 to 8;
providing a layup or pre-form on the mould surface; and
heating the layup or pre-form using the heating pad.

12. The method according to claim 11, comprising inflating the inflatable bladder, to urge the heating pad against the second surface of the panel member.

13. The method of claim 10 or 11, comprising flowing a heated fluid medium into the inflatable bladder and/or flowing a cooled fluid medium into the or each inflatable bladder, after the step of heating.

14. A method comprising:
providing an apparatus comprising:
a support structure; and
a panel member mounted to the support structure; having a first face and an opposite second face; at least portion of the first face thereof defining a mould surface;
the method comprising:
providing a heating module that comprises an inflatable bladder and a heating pad; and
mounting the heating module to the support structure with the heating pad is disposed between the inflatable bladder and the second face, such that the inflatable bladder is inflatable to urge the heating pad against the second face.

15. The method of claim 14, comprising removing one or more of a heating pad, an inflatable bladder or a heating module from the apparatus and optionally replacing said heating pad, inflatable bladder or heating module with a further heating pad, inflatable bladder or heating module.
